(19) Europäisches Patentamt
European Patent Office
Office européen des brevets

(11) Publication number: **0 159 846 B1**

(12) # EUROPEAN PATENT SPECIFICATION

(45) Date of publication of patent specification: **19.07.89**

(51) Int. Cl.[4]: **C 01 B 33/28,** B 01 J 29/28

(21) Application number: **85302426.3**

(22) Date of filing: **04.04.85**

(54) **Preparation of zeolite beta.**

(30) Priority: **16.04.84 US 600682**

(43) Date of publication of application:
**30.10.85 Bulletin 85/44**

(45) Publication of the grant of the patent:
**19.07.89 Bulletin 89/29**

(84) Designated Contracting States:
**BE DE FR GB IT NL SE**

(56) References cited:
**EP-A-0 055 046**
**DE-A-2 548 697**
**DE-B-2 212 810**
**US-A-3 308 069**
**US-A-3 382 449**
**US-A-4 061 717**

(73) Proprietor: **MOBIL OIL CORPORATION**
**150 East 42nd Street**
**New York New York 10017 (US)**

(72) Inventor: **Rubin, Mae Koenig**
**50 Belmont Avenue**
**Bala Cynwyd Pennsylvania 19004 (US)**

(74) Representative: **Davy, John Raymond et al**
**CARPMAELS & RANSFORD 43, Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 159 846 B1

## Description

This invention relates to a new method for synthesis of zeolite Beta, to the crystalline silicate product of that new method and to use of that crystalline silicate as a catalyst for organic compound, e.g. hydrocarbon compound, conversion.

Crystalline zeolite Beta, which is identified by its x-ray diffraction pattern, and its conventional preparation employing a tetraethylammonium compound as directing agent are disclosed in US—A—3,308,069. It is also known in zeolite synthesis to employ as directing agent precursors to a quaternary ammonium compound.

According to the invention a method for preparing zeolite Beta comprises forming a reaction mixture containing sources of alkali metal oxide, an oxide of aluminum, an oxide of silicon, dimethylbenzylamine, benzyl halide and water and having a composition, in terms of mole ratios, within the following ranges:

| | Broad | Preferred |
|---|---|---|
| $SiO_2/Al_2O_3$ | 60 to 300 | 80 to 200 |
| $OH^-/SiO_2$ | 0.09 to 0.37 | 0.1 to 0.2 |
| $H_2O/OH^-$ | 70 to 200 | 80 to 170 |
| $(R'+R'')/(R'+R''+M)$ | 0.2 to 1.0 | 0.4 to 0.8 |

wherein R' is dimethylbenzylamine, R'' is benzyl halide, e.g. chloride, bromide or iodide, and M is an alkali metal ion, and maintaining the mixture until crystals of the crystalline zeolite Beta are formed. The quantity of $OH^-$ is calculated only from the inorganic sources of alkali without any organic base contribution. Thereafter, the crystals are separated from the liquid and recovered. Reaction conditions required consist of heating the foregoing reaction mixture to a temperature of from about 100°C to about 150°C for a period of time of from about 24 hours to about 120 days. A more preferred temperature range is from about 130°C to about 140°C with the amount of time at a temperature in such range being from about 24 hours to about 22 days. The solid product is separated from the reaction medium, as by cooling the whole to room temperature, filtering and water washing.

Zeolite Beta synthesized in accordance with the present method exhibits a wide range of silica/alumina mole ratios and significant catalytic activity for certain conversions of interest, including low pressure hydrocracking, hydroisomerization and dewaxing.

The particular effectiveness of the presently required combination of dimethylbenzylamine and benzyl halide, when compared with other directing agents, is believed due to the ability of their reaction product, *in situ,* to function as a template in the nucleation and growth of zeolite Beta crystals. The reaction product is believed to be the halide salt of dibenzyldimethylammonium.

The reaction mixture composition can be prepared from materials which supply the appropriate oxide. Such compositions include aluminates, alumina, silicates, silica hydrosol, silica gel, silicic acid and hydroxides. Each oxide component utilized in the reaction mixture for preparing the zeolite can be supplied by one or more essential reactants and they can be mixed together in any order. For example, any oxide can be supplied by an aqueous solution, sodium hydroxide or by an aqueous solution of a suitable silicate; the organic cation can be supplied by the directing agent compound of that cation, such as, for example, the hydroxide or a salt, e.g. halide, such as chloride, bromide or iodide. The reaction mixture can be prepared either batchwise or continuously. Crystal size and crystallization time will vary with the nature of the reaction mixture employed.

The molar ratio of dimethylbenzylamine to benzyl halide should be within the range of 0.3 to 0.6 in the reaction mixture, and preferably about 0.5. The present method for zeolite Beta synthesis is economically desirable when compared to prior art methods, since it avoids costly use of quaternary ammonium compounds. The amine and halide for use herein are less expensive than a quaternary salt.

Zeolite Beta freshly synthesised in accordance with the invention will usually conform with the formula in terms of mole ratios of oxides and in the anhydrous state:

$$(1 \text{ to } 25)R_2O: (0 \text{ to } 0.8)M_{2/n}O:Al_2O_3:(X)SiO_2$$

wherein M is at least one alkali metal cation having a valence n, R, usually in excess in the as synthesized composition, is the cation derived from the *in situ* reaction product of the dimethylbenzylamine and the benzyl halide reaction mixture components, and X is from 10 to 300.

The original cations can be replaced, at least in part, by calcination and/or ion exchange with another cation. Thus, the original alkali metal cations are exchanged into a hydrogen or hydrogen ion precursor form or a form in which the original cation has been replaced by a metal of Groups IIA, IIIA, IVA, IB, IIB, IIIB, IVB, VIB or VIII of the Periodic Table. Thus, for example, it is contemplated to exchange the original cations with ammonium ions or with hydronium ions. Catalytically active forms of these would include, in particular, hydrogen, rare earth metals, aluminum, metals of Groups II and VIII of the Periodic Table and manganese.

The x-ray diffraction pattern of zeolite Beta has the characteristic lines shown in Table 1.

TABLE 1

| Interplanar d-spacing (A) | Relative intensity ($I/I_o$) |
|---|---|
| 11.5±0.4 | M—S |
| 7.4±0.2 | W |
| 6.6±0.15 | W |
| 4.15±0.10 | W |
| 3.97±0.10 | VS |
| 3.00±0.07 | W |
| 2.05±0.05 | W |

These values were determined by standard technique. The radiation was the K-alpha doublet of copper, and a diffraction equipped with a scintillation counter and a strip chart pen recorder was used. The peak heights, I, and the positions as a function of two times theta, where theta is the Bragg angle, were read from the spectometer chart. From these, the relative intensities, 100 $I/I_o$ where $I_o$ is the intensity of the strongest line or peak, and d (obs.), the interplanar spacing in Angstrom units (A) corresponding to the recorded lines, were calculated. In Table 1 the relative intensities are given in terms of the symbols W=weak, M=medium, S=strong and VS=very strong. Ion exchanged forms of the zeolite manifest substantially the same pattern with some minor shifts in interplanar spacing and variation in relative intensity. Other minor variations can occur depending on the silicon to aluminum ratio of the particular sample and its thermal history.

While the crystalline silicate of the present invention may be used in a wide variety of organic compound, e.g. hydrocarbon compound, conversion reactions, it is notably useful in the processes of low pressure hydrocracking, hydroisomerization dewaxing and cracking. Other conversion processes for which improved zeolite Beta may be utilized in one or more of its active forms include, for example, hydrocracking and converting light aliphatics to aromatics such as in US—A—3,760,024.

Zeolite Beta prepared in accordance herewith can be used either in the organic nitrogen-containing and alkali metal containing form, the alkali metal form and hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith, for example by, in the case of platinum, treating the zeolite with a platinum metal-containing ion. Suitable platinum compounds for this purpose include chloroplatinic acid, platinuous chloride and various compounds containing the platinum amine complex. Combinations of metals and methods for their introduction can also be used.

Zeolite Beta, when employed either as an adsorbent or as a catalyst, should be dehydrated at least partially, suitably by heating to a temperature in the range of from about 200°C to about 600°C in an inert atmosphere, such as air, nitrogen, etc. and at atmospheric or subatmospheric pressures for between 1 and 48 hours. Dehydration can also be performed at lower temperature merely by placing the zeolite in a vacuum, but a longer time is required to obtain a particular degree of dehydration. The organic cations of freshly synthesized zeolite Beta can be decomposed by heating to a temperature up to about 550°C for from 1 hour to about 48 hours.

As above mentioned, zeolite Beta prepared in accordance herewith can have the original cations associated therewith replaced by a wide variety of other cations according to techniques well known in the art. Typical replacing cations include hydrogen, ammonium and metal cations including mixtures thereof. Of the replacing metallic cations, particular preference is given to cations of metals such as rare earths, Mn, Ca, Mg, Zn, Cd, Pd, Ni, Cu, Ti, Al, Sn, Fe and Co.

Typical ion exchange techniques would be to contact the synthetic zeolite with a salt of the desired replacing cation or cations. Although a wide variety of salts can be employed, particular preference is given to chlorides, nitrates and sulfates.

Catalyts comprising zeolite Beta prepared according to the invention may be formed in a wide variety of particle sizes. Generally speaking, the particles can be in the form of a powder, a granule, or a molded product, such as extrudate. In cases where the catalyst is molded, such as by extrusion, the crystalline silicate can be extruded before drying or dried or partially dried and then extruded.

In the case of many catalysts it is desirable to composite a zeolite with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina and are described in our EP—A—1695.

Employing a catalytically active form of the composition of this invention containing a hydrogenation component, reforming stocks can be reformed employing a temperature between 370°C and 540°C. The pressure can be between 100 and 1000 psig (7.9 to 70 bar), but is preferably between 200 and 700 psig (14.8 to 49.3 bar). The liquid hourly space velocity is generally between 0.1 and 10 $hr^{-1}$, preferably between 0.5 and 4 $hr^{-1}$ and the hydrogen to hydrocarbon mole ratio is generally between 1 and 20, preferably between 4 and 12.

The catalyst can also be used for hydroisomerization of normal paraffins, when provided with a hydrogenation component, e.g. platinum. Hydroisomerization is carried out at a temperature between 90°C to 370°C, preferably 140°C to 290°C,

with a liquid hourly space velocity between 0.01 and 2 $hr^{-1}$, preferably between 0.25 and 0.50 $hr^{-1}$, employing hydrogen such that the hydrogen to hydrocarbon mole ratio is between 1 and 5. Additionally, the catalyst can be used for olefin or aromatics isomerization employing temperatures between 0°C and 370°C.

The catalyst can also be used for reducing the pour point of gas oils. This process is carried out at a liquid hourly space velocity between about 10 and about 30 $hr^{-1}$ and a temperature between about 400°C and about 540°C.

Other reactions which can be accomplished employing the catalyst of this invention containing a metal, e.g. platinum, include hydrogenation-dehydrogenation reactions and desulfurization reactions, olefin polymerization (oligomerization), and other organic compound conversions such as the conversion of alcohols (e.g. methanol) to hydrocarbons.

The following examples illustrate the invention. In the examples, whenever adsorption data are set forth for comparison of sorptive capacities for water, cyclohexane and n-hexane, they were determined as follows:

A weighed sample of the calcined adsorbant was contacted with the desired pure adsorbate vapor in an adsorption chamber, evacuated to 1 mm and contacted with 12 mm Hg of water vapor or 20 mm Hg of n-hexane, or cyclohexane vapor, pressures less than the vapor-liquid equilibrium pressure of the respective adsorbate at room temperature. The pressure was kept constant (within about ±0.5 mm) by addition of adsorbate vapor controlled by a monostat during the adsorption period, which did not exceed about 8 hours. As adsorbate was adsorbed by the sorbant material, the decrease in pressure caused the monostat to open a valve which admitted more adsorbate vapor to the chamber to restore the above control pressures. Sorption was complete when the pressure change was not sufficient to activate the monostat. The increase in weight was calculated as the adsorption capacity of the sample in g/100 g of calcined adsorbant (1 mm Hg=133.322 Pa).

Example 1

A solution of 0.42 grams of sodium aluminate (43.3% $Al_2O_3$ and 32.2% $Na_2O$), 2.0 grams NaOH and 20.0 grams of water was added to 90.0 grams of colloidal silica (30% solution). To this was then added 5.7 grams of dimethylbenzylamine and 5.5 grams of benzyl chloride. The total was then thoroughly mixed. The mixture, which had the composition in mole ratios:

| | |
|---|---|
| $SiO_2/Al_2O_3$ | = 252 |
| $OH^-/SiO_2$ | = 0.12 |
| $H_2O/OH^-$ | = 84.8 |
| $(R'+R'')/(R'+R''+Na)$ | = 0.61 |

wherein R' is dimethylbenzylamine and R'' is benzyl chloride, was then allowed to crystallize in a glass-lined stainless steel autoclave at 125°C for 21 days. The crystalline product was separated from the remaining mixture, filtered, washed with water and dried at 135°C.

Chemical analysis showed the composition of the crystalline product to be:

| | |
|---|---|
| 10.7 wt.% | C |
| 0.90 wt.% | N |
| 0.14 wt.% | Na |
| 0.83 wt.% | $Al_2O_3$ |
| 83.4 wt.% | $SiO_2$ |
| 86.7 wt.% | Ash |
| 171 | $SiO_2/Al_2O_3$ molar ratio |

X-ray analysis indicated crystalline zeolite Beta, with a trace of non-Beta crystalline material.

A quantity of the product was calcined at 550°C for 16 hours in air, and then tested for sorption properties. The results were:

9.6 wt.% cyclohexane sorbed,
8.1 wt.% n-hexane sorbed, and
11.3 wt.% water sorbed.

Example 2

A solution of 0.46 grams of sodium aluminate (43.3% $Al_2O_3$ and 32.2% $Na_2O$), 2.48 grams NaOH and 161.0 grams of water was added to 36.8 grams of colloidal silica (30% solution). To this was then added 15.5 grams of dimethylbenzylamine and 14.5 grams of benzyl chloride. The total was then thoroughly mixed. The mixture, which had the composition in mole ratios:

| | |
|---|---|
| $SiO_2/Al_2O_3$ | = 92.3 |
| $OH^-/SiO_2$ | = 0.37 |
| $H_2O/OH^-$ | = 155 |
| $(R'+R'')/(R'+R''+Na)$ | = 0.77 |

wherein R' is dimethylbenzylamine and R'' is benzyl chloride, was then allowed to crystallize in a polypropylene jar under static conditions at 100°C for 35 days. The crystalline product was separated from the remaining mixture, filtered, washed with water and dried at 135°C.

Chemical analysis showed the composition of the crystalline product to be:

| | |
|---|---|
| 0.1 wt.% | Na |
| 1.9 wt.% | $Al_2O_3$ |
| 72.7 wt.% | $SiO_2$ |
| 75.3 wt.% | Ash |
| 65.1 | $SiO_2/Al_2O_3$ molar ratio |

The crystalline product was dried at 110°C in air and subjected to x-ray analysis. Its diffraction pattern conformed with that set forth in Table 1 and indicated 60% crystallinity of the zeolite Beta relative to a reference standard.

A quantity of the product was calcined at 540°C for 16 hours in air, and then tested for sorption properties. The results were:

22.4 wt.% cyclohexane sorbed,
17.2 wt.% n-hexane sorbed, and
25.5 wt.% water sorbed.

Example 3

A solution of 0.74 grams of sodium aluminate (43.3% $Al_2O_3$ and 32.2% $Na_2O$), 30 grams NaOH and 116 grams of water was added to 80.0 grams of colloidal silica (30% solution). To this was then added 9.93 grams of dimethylbenzylamine and 9.3 grams of benzyl chloride. The total was then thoroughly mixed. The mixture, which had the composition in mole ratios:

| | |
|---|---|
| $SiO_2/Al_2O_3$ | = 127 |
| $OH^-/SiO_2$ | = 0.22 |
| $H_2O/OH^-$ | = 109 |
| $(R'+R'')/(R'+R''+Na)$ | = 0.63 |

wherein R' is dimethylbenzylamine and R'' is benzyl chloride, was then allowed to crystallize in a polypropylene jar under static conditions at 100°C for 115 days. The crystalline product was separated from the remaining mixture, filtered, washed with water and dried at 135°C and submitted for chemical and x-ray diffraction analysis. Chemical analysis showed:

| | |
|---|---|
| 1.3 wt.% | $Al_2O_3$ |
| 74.9 wt.% | $SiO_2$ |
| 97.9 | $SiO_2/Al_2O_3$ molar ratio |

The x-ray results indicated a 55% crystalline zeolite Beta (relative to standard) with a minor amount of non-Beta crystalline material.

**Claims**

1. A method for synthesizing zeolite Beta which comprises preparing a mixture containing sources of alkali metal (M) oxide, an oxide of aluminum, an oxide of silicon, dimethylbenzylamine (R'), benzyl halide (R'') and water and having a composition, in terms of mole ratios, within the following ranges:

| | |
|---|---|
| $SiO_2/Al_2O_3$ | = 60 to 300 |
| $OH^-/SiO_2$ | = 0.09 to 0.37 |
| $H_2O/OH^-$ | = 70 to 200 |
| $(R'+R'')/(R'+R''+M)$ | = 0.2 to 1.0 |

and maintaining the mixture at a temperature of 100°C to 150°C for 1 to 120 days until crystals of the zeolite are formed.

2. The method of claim 1 wherein said mixture has a composition, in terms of mole ratios, as follows:

| | |
|---|---|
| $SiO_2/Al_2O_3$ | = 80 to 200 |
| $OH^-/SiO_2$ | = 0.1 to 0.2 |
| $H_2O/OH^-$ | = 80 to 170 |
| $(R'+R'')/(R'+R''+M)$ | = 0.4 to 0.8 |

3. The method of claim 1 or claim 2 wherein said benzyl halide is the chloride, bromide or iodide.

4. Zeolite Beta having the composition, in the as-synthesised anhydrous state, expressed in terms of mole ratios of oxides, as follows:

$$(1 \text{ to } 25)R_2O:(0 \text{ to } 0.8)M_{2/n}O:Al_2O_3:(X)SiO_2$$

wherein M is at least one alkali metal cation having the valence n, R is a cation derived from the reaction product of dimethylbenzylamine and benzyl halide and X is from 10 to 300.

5. The zeolite of claim 4 wherein M is sodium.

**Patentansprüche**

1. Verfahren zur Synthese von Zeolith Beta, bei dem eine Mischung hergestellt wird, die Quellen von Alkalimetall-(M)oxid, ein Oxid von Aluminium, ein Oxid von Silicium, Dimethylbenzylamin(R'), ein Benzylhalogenid(R'') und Wasser enthält und eine auf die Molverhältnisse bezogene Zusammensetzung innerhalb der folgenden Bereiche aufweist:

| | |
|---|---|
| $SiO_2/Al_2O_3$ | = 60 bis 300 |
| $OH^-/SiO_2$ | = 0,09 bis 0,37 |
| $H_2O/OH^-$ | = 70 bis 200 |
| $(R'+R'')/(R'+R''+M)$ | = 0,2 bis 1,0 |

und diese Mischung 1 bis 120 Tage lang bei einer Temperatur von 100 bis 150°C gehalten wird, bis die Kristalle des Zeoliths gebildet sind.

2. Verfahren nach Anspruch 1, worin die Mischung bezogen auf die Molverhältnisse die folgende Zusammensetzung aufweist:

| | |
|---|---|
| $SiO_2/Al_2O_3$ | = 80 bis 200 |
| $OH^-/SiO_2$ | = 0,1 bis 0,2 |
| $H_2O/OH^-$ | = 80 bis 170 |
| $(R'+R'')/(R'+R''+M)$ | = 0,4 bis 0,8. |

3. Verfahren nach Anspruch 1 oder 2, worin das Benzylhalogenid Chlorid, Bromid oder Jodid ist.

4. Zeolith Beta, der in dem wasserfreien Zustand, in dem er synthetisiert wurde, die folgende als Molverhältnis der Oxide ausgedrückte Zusammensetzung aufweist:

$$(1 \text{ bis } 25)R_2O:(0 \text{ bis } 0{,}8)M_{2/n}O:Al_2O_3:(X)SiO_2,$$

worin M zumindest ein Alkalimetallkation mit der Wertigkeit n ist, R ein vom Reaktionsprodukt von Dimethylbenzylamin und Benzylhalogenid abgeleitetes Kation ist und X von 10 bis 300 beträgt.

5. Zeolith nach Anspruch 4, worin M Natrium ist.

**Revendications**

1. Un procédé pour la synthèse d'une zéolite béta qui consiste à préparer un mélange contenant des sources d'un oxyde de métal alcalin (M), un oxyde d'aluminium, un oxyde de silicium, une diméthylbenzylamine (R'), un halogénure de benzyle (R'') et de l'eau et présentant une composition, exprimée en rapport molaire, dans la fourchette suivante

| | |
|---|---|
| · $SiO_2/Al_2O_3$ | 60 à 300 |
| · $OH^-/SiO_2$ | 0,09 à 0,37 |
| · $H_2O/OH^-$ | 70 à 200 |
| · $(R'+R'')/(R'+R''+M)$ | 0,2 à 1,0 |

et à maintenir le mélange à une température comprise entre 100°C et 150°C pendant 1 à 120 jours jusqu'à ce que se forment des cristaux de la zéolite.

2. Le procédé selon la revendication 1, dans lequel ledit mélange présente la composition, exprimée en rapport molaire, suivante

| | |
|---|---|
| · $SiO_2/Al_2O_3$ | 80 à 200 |
| · $OH^-/SiO_2$ | 0,1 à 0,2 |
| · $H_2O/OH^-$ | 80 à 170 |
| · $(R'+R'')/(R'+R''+M)$ | 0,4 à 0,8 |

3. Le procédé selon la revendication 1 ou la revendication 2, dans lequel ledit halogénure de benzyle est le chlorure, le bromure ou l'iodure de benzyle.

4. Une zéolite béta présentant la composition, dans l'état anhydre tel qu'obtenu par synthèse, exprimée en rapport molaire des oxydes, suivante

$$(1 \text{ à } 25)R_2O:(0 \text{ à } 0{,}8)M_{2/n}O:Al_2O_3:(X)SiO_2$$

dans laquelle:

M est au moins un cation d'un métal alcalin présentant la valence n;

R est un cation dérivant du produit de la réaction d'une diméthylbenzylamine et d'un halogénure de benzyle; et

X est compris entre 10 et 300.

5. La zéolite selon la revendication 4, dans laquelle M est le sodium.